# EUROPEAN PATENT SPECIFICATION

(11) **EP 2 008 798 B1**
(45) Date of publication and mention of the grant of the patent: **06.06.2012**
(21) Application number: 08153853.0
(22) Date of filing: 31.03.2008
(51) Int. Cl.: B29D 30/24

(54) **Tyre building drum**
Trommel zur Reifenerzeugung
Tambour servant à fabriquer des pneus

(30) Priority: 27.06.2007 IT TO20070465
(43) Date of publication of application: 31.12.2008
(73) Proprietor: Bridgestone Corporation, Tokyo 104-8340 (JP)
(72) Inventor: Barbati, Oreste, 00179 Roma (IT)
(74) Representative: Jorio, Paolo

(56) References cited:
- WO-A-2006/033119
- JP-A- 7 100 954
- US-A- 4 214 939
- US-A1- 2005 279 444

## Description

### TECHNICAL FIELD

The present invention relates to a tyre building drum according to the preamble of claim 1.

### BACKGROUND ART

Conventional tyre manufacturing employs a first-stage building drum, on which the various parts of the tyre are applied successively to form a cylindrical carcass; and the cylindrical carcass is transferred to an expandible second-stage building drum, on which the cylindrical carcass is expanded centrally into a toroidal shape and fitted with the remaining parts of the tyre (belts and tread). In other words, conventional tyre manufacturing employs two separate building drums, and calls for transferring the carcass from one drum to the other.

More recently, a single-stage building drum has been proposed, on which to both assemble and expand the carcass. A single-stage building drum, however, is of complex design, by having to expand and contract both axially and radially.

A single-stage building drum, such as the one described, for example, in Patent Application EP1674248, is supported on a central shaft mounted to rotate about a longitudinal axis of rotation, and comprises two specularly identical half-drums (one right and one left) movable axially to and from each other (i.e. parallel to the longitudinal axis of rotation).

From the outside inwards, each half-drum comprises a lateral section with a bead locking device, which is also movable radially (i.e. perpendicular to the longitudinal axis of rotation) to expand or contract; and a central section, which is also movable radially to expand or contract independently of the bead locking device.

Each central section comprises an annular supporting body supporting a number of segments equally spaced about and movable radially with respect to the supporting body. Each segment comprises a number of fingers spaced a given distance apart to define, between each two adjacent fingers, a recess of at least the same width as a finger. And the fingers of the segments of one central section are positioned facing and aligned with the recesses of the segments of the other central section, so that each finger slides freely inside a respective recess between two fingers on the other central section, and the fingers of the segments interlace when the two central sections are brought together.

Both the central sections are covered with a toroidal, deformable, flexible former bladder (or sleeve) fixed laterally to each supporting body by a fastening ring screwed to an outer lateral wall of the supporting body. In actual use, the former bladder is inflated with compressed air to impart a toroidal shape to the carcass of the tyre being built.

To change the size of the above building drum, i.e. the size of the tyres formed on the building drum, the former bladder and possibly also the segments of the two central sections must be changed. Whichever the case, the former bladder must always be removed from the central sections, which means removing the former bladder fastening rings. This is a complicated, time-consuming job, which involves removing the lateral sections to remove the fastening ring screws from the outer lateral walls of the supporting bodies of the central sections.

US2005279444A1, US4214939A1, WO2006033119A1 and JP07100954A disclose a tyre building drum according to the preamble of independent claim 1.

### DISCLOSURE OF THE INVENTION

It is an object of the present invention to provide a tyre building drum which is cheap and easy to produce, eliminates the aforementioned drawbacks, and, in particular, provides for making fast size changes.

According to the present invention, there is provided a tyre building drum as claimed in the accompanying Claims.

### BRIEF DESCRIPTION OF THE DRAWINGS

A non-limiting embodiment of the present invention will be described by way of example with reference to the accompanying drawings, in which:
Figure 1 shows a schematic view in perspective, with parts removed for clarity, of the central sections of a tyre building drum in accordance with the present invention;
Figure 2 shows a schematic longitudinal section, with parts removed for clarity, of part of the Figure 1 building drum in a work configuration;
Figure 3 shows a schematic longitudinal section, with parts removed for clarity, of part of the Figure 1 building drum in a size-change or maintenance configuration;
Figure 4 shows a larger-scale view of Figure 2;
Figure 5 shows a schematic cross section, with parts removed for clarity, of a central section of the

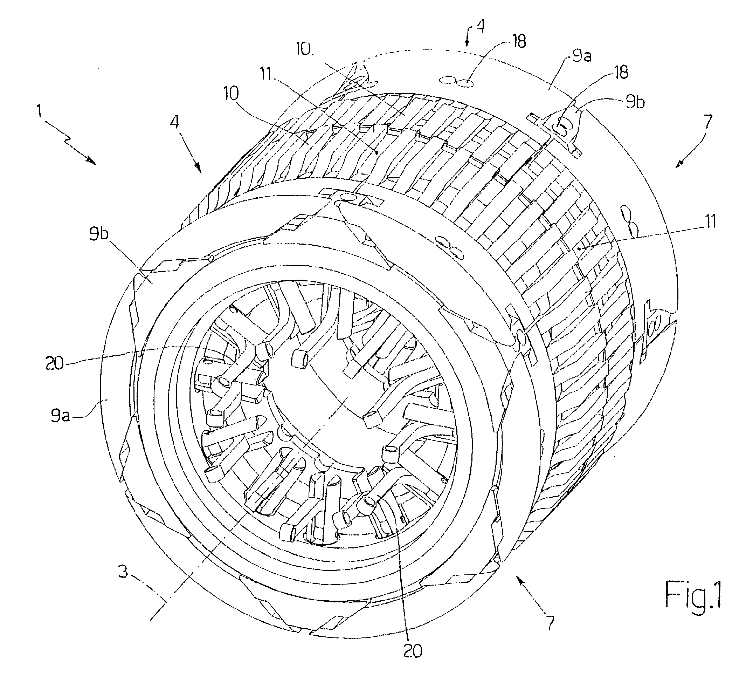

Figure 1 building drum in a contracted configuration and expanded configuration;

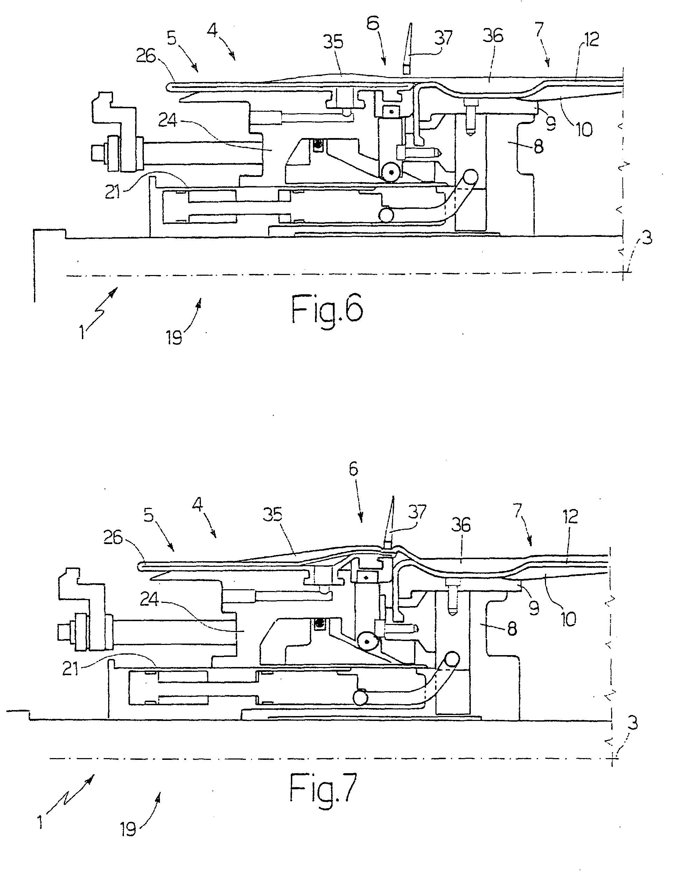

Figures 6-10 show a succession of schematic longitudinal sections, with parts removed for clarity, of part of the Figure 1 building drum in the course of building a tyre.

### PREFERRED EMBODIMENTS OF THE INVENTION

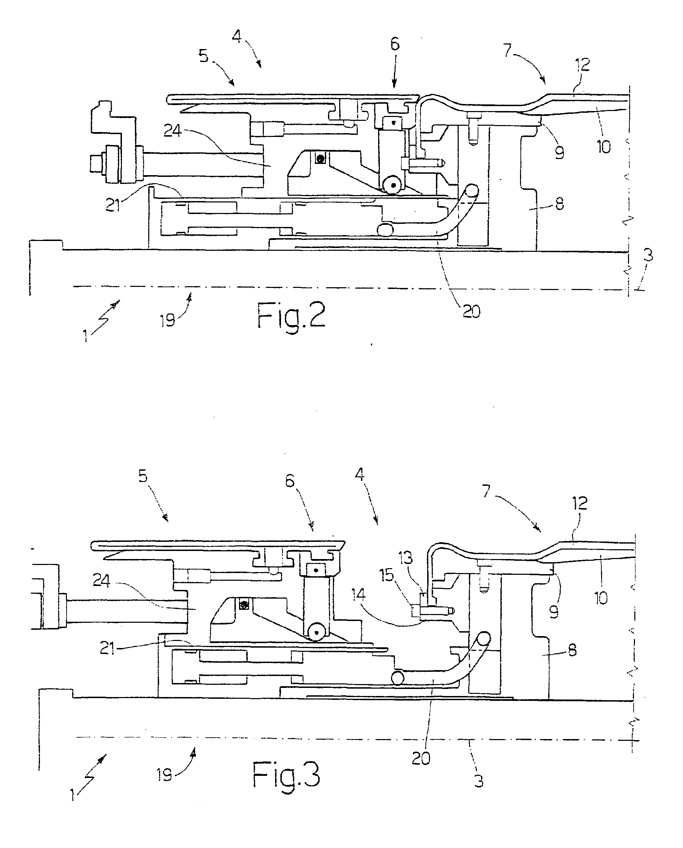

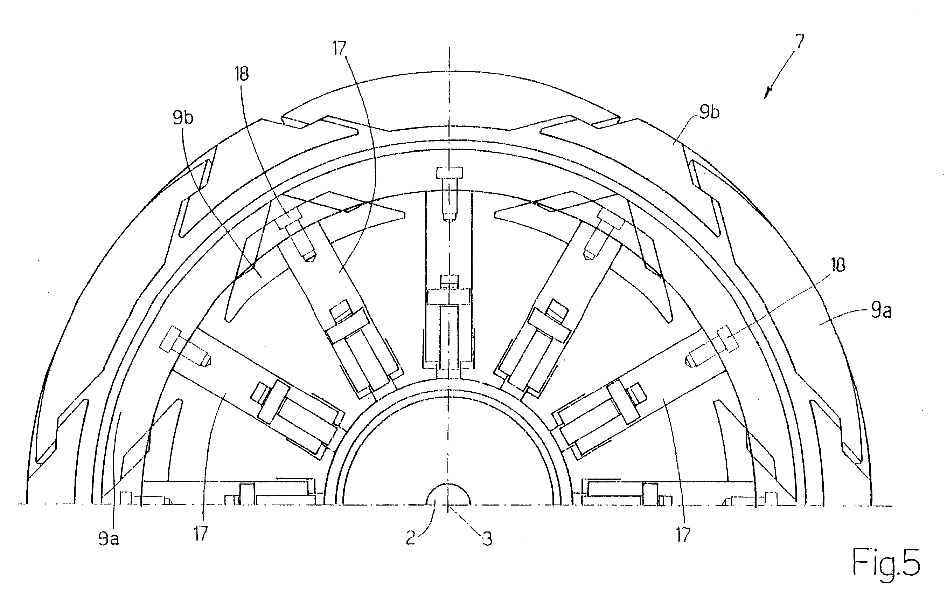

Number 1 in Figures 1 and 2 indicates as a whole a single-stage building drum supported on a central shaft 2 (Figure 5) mounted to rotate about a longitudinal axis of rotation 3. Building drum 1 comprises two specularly identical half-drums 4 movable to and from each other axially (i.e. parallel to longitudinal axis of rotation 3). That is, each half-drum 4 is mounted on a slide to slide axially, with respect to central shaft 2, under the control of a pneumatic actuator.

From the outside inwards, each half-drum 4 comprises a lateral section 5 with a bead locking device 6, which is also movable radially (i.e. perpendicular to longitudinal axis of rotation 3) to expand or contract; and a central section 7, which is also movable radially to expand or contract independently of bead locking device 6.

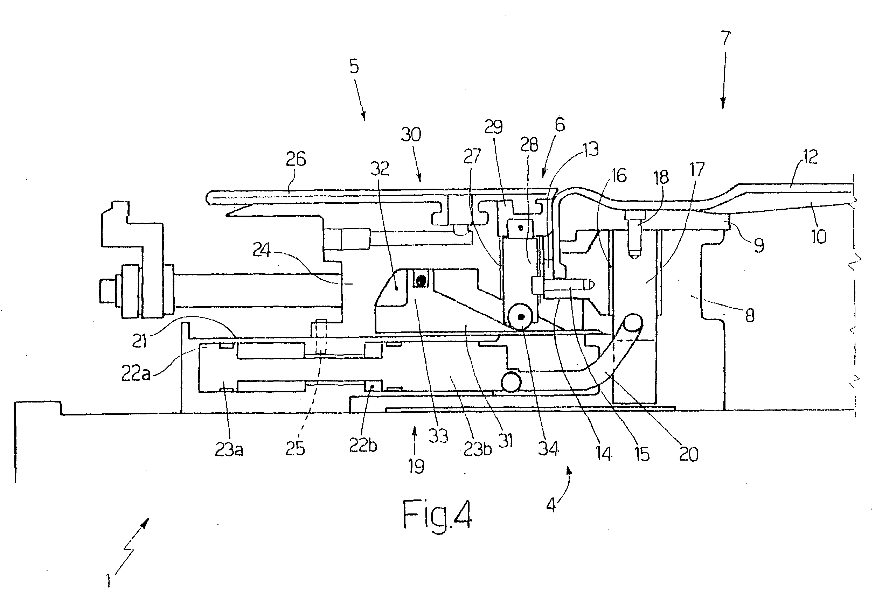

As shown in Figure 4, each central section 7 comprises an annular supporting body 8 supporting a number of segments 9 equally spaced about and movable radially with respect to supporting body 8. Each segment 9 comprises a number of fingers 10 spaced a given distance apart to define, between each two adjacent fingers 10, a recess 11 (Figure 1) of at least the same width as a finger 10. And the fingers 10 of segments 9 of one central section 7 are positioned facing and aligned with the recesses 11 of segments 9 of the other central section 7, so that each finger 10 slides freely inside a respective recess 11 between two fingers 10 on the other central section 7, and the fingers 10 of segments 9 interlace when the two central sections 7 are brought together.

Both the central sections 7 are covered with a common toroidal, deformable, flexible former bladder 12 fixed laterally to each supporting body 8 by a fastening ring 13 screwed to an outer lateral wall 14 of supporting body 8 by screws 15. In actual use, former bladder 12 is inflated with compressed air to impart a toroidal shape to the carcass of the tyre being built.

Annular supporting body 8 has a number of cylindrical radial seats 16, each housing in sliding manner a piston 17 supporting a segment 9. More specifically, each segment 9 is screwed to piston 17 by two radial screws 18 (only one shown in Figure 4); and each piston 17 is moved radially along cylindrical radial seat 16 by a pneumatic actuating device 19 connected mechanically to piston 17 by a curved transmission lever 20.

In a preferred embodiment, pneumatic actuating device 19 comprises an annular actuating body 21, in which are defined two annular chambers 22a, 22b, in which respective integral pistons 23a, 23b slide axially; and each curved transmission lever 20 is hinged at one end to piston 23b, and at the other end to piston 17. The two chambers 22a, 22b of pneumatic actuating device 19 operate in series, and are connectable by respective solenoid valves to a compressed-air source to move pistons 23 towards the centre of building drum 1 and so move segments 9 away from shaft 2, or are connectable by the respective solenoid valves to a vacuum source to move pistons 23 towards the periphery of building drum 1, and so move segments 9 towards shaft 2.

In a different embodiment not shown, actuating device 19 comprises one annular chamber 22, along which one piston 23 slides.

Each lateral section 5 comprises an annular supporting body 24 mounted to slide axially, on annular actuating body 21 of pneumatic actuating device 19, between a work position (Figure 2) and a maintenance position (Figure 3). In a preferred embodiment, in the work position, annular supporting body 24 is locked to annular actuating body 21 of pneumatic actuating device 19 by a number of radial lock screws 25 (only one shown in Figure 4).

Each annular supporting body 24 supports an inflatable annular bag 26 connectable by a respective solenoid valve to a compressed-air source for inflation, or to a vacuum source for deflation.

On the side facing central section 7, each supporting body 24 has a number of cylindrical radial seats 27, each housing in sliding manner a piston 28 supporting a segment 29; segments 29 all combine to define bead locking device 6; and each piston 28 is moved radially along cylindrical radial seat 27 by a pneumatic actuating device 30 connected mechanically to piston 28 by a connecting wedge 31.

Pneumatic actuating device 30 comprises an annular chamber 32 formed inside supporting body 24, and along which a piston 33, integral with connecting wedge 31, slides axially. For easy travel of each piston 28 along the sloping surface of connecting wedge 31, the bottom portion of each piston 28 is preferably fitted with an idle roller 34 which rolls along the sloping surface of connecting wedge 31.

Chamber 32 of pneumatic actuating device 30 is connectable by a respective solenoid valve to a compressed-air source to move pistons 33 outwards of building drum 1 and so move segments 29 away from shaft 2, or is connectable by the respective solenoid valve to a vacuum source to move pistons 33 inwards of building drum 1, and so move segments 29 towards shaft 2.

To change the size of building drum 1, i.e. the size of the tyres formed on building drum 1, former bladder 12 and possibly also segments 9 of the two central sections 7 must be changed. Whichever the case, former bladder 12 must always be removed from central sections 7, which means removing fastening rings 13 of former bladder 12.

To remove/assemble fastening rings 13 of former bladder 12, lateral sections 5 must be withdrawn from central sections 7 to remove/tighten screws 15 of fastening rings 13 from/to the outer lateral walls 14 of supporting bodies 8 of central sections 7. Lateral sections 5 are withdrawn from central sections 7 by simply moving the two supporting bodies 24 of lateral sections 5 from the work position (Figure 2) to the maintenance position (Figure 3), which can be done quickly and easily, by virtue of each supporting body 24 being mounted to slide axially on actuating body 21 of pneumatic actuating device 19. In other words, by simply loosening (or removing) lock screws 25 securing each supporting body 24 to actuating body 21 of pneumatic actuating device 19 underneath, and then pushing supporting body 24 manually outwards.

Given the ease and speed with which lateral sections 5 and central sections 7 are parted, former bladder 12 of building drum 1 described above can be changed 70% faster than that of a similar conventional building drum.

If necessary, segments 9 may also be changed quickly and easily, by virtue of screws 15 of segments 9 being clearly visible and accessible from the outside once former bladder 12 is removed.

As shown in Figure 5, segments 9 are not all alike, but divided into two alternating types, i.e. outer segments 9a alternating with inner segments 9b. Each outer segment 9a has a trapezoidal section with a circular outer major base, so that a recess is formed, between each two adjacent outer segments 9a, in which to fit an inner segment 9b, which has a trapezoidal section with an outer minor base.

When segments 9 are in the contracted position, the outer surface of central sections 7 is defined solely by the union of the outer surfaces of outer segments 9a; conversely, when segments 9 expand, the gap formed between each two adjacent outer segments 9a is filled by an underlying inner segment 9b, so that, even in the expanded configuration, central sections 7 have a sufficiently even outer surface (i.e. with no major breaks) to effectively support the component parts of the tyre being formed.

As shown clearly in Figure 5, as central sections 7 expand/contract, inner segments 9b travel further than outer segments 9a (roughly 10-12 mm further), which is achieved by a difference in the shape and/or size of transmission levers 20, and in the axial position of the pivots of transmission levers 20 contacting corresponding pistons 17. In other words, pneumatic actuating device 19 is the same for all of segments 9 (i.e. produces the same travel for all of segments 9), and the difference in travel between inner segments 9b and outer segments 9a is achieved solely by a different transmission ratio produced by the difference in transmission levers 20. Because transmission levers 20 of inner segments 9b are larger than transmission levers 20 of outer segments 9a, the cylindrical seats 16 associated with inner segments 9b are offset roughly 10 mm axially (i.e. parallel to axis of rotation 3) with respect to cylindrical seats 16 associated with outer segments 9a, so as to accommodate the larger transmission levers 20 of inner segments 9b.

Formation of a tyre on building drum 1 will now be described with reference to Figures 6-10.

To begin with, the various parts of the tyre - first the sidewalls 35 and then the carcass 36 and beads 37 - are placed about building drum 1 (Figure 6).

Bead locking devices 6 are then activated to lock beads 37 (Figure 7).

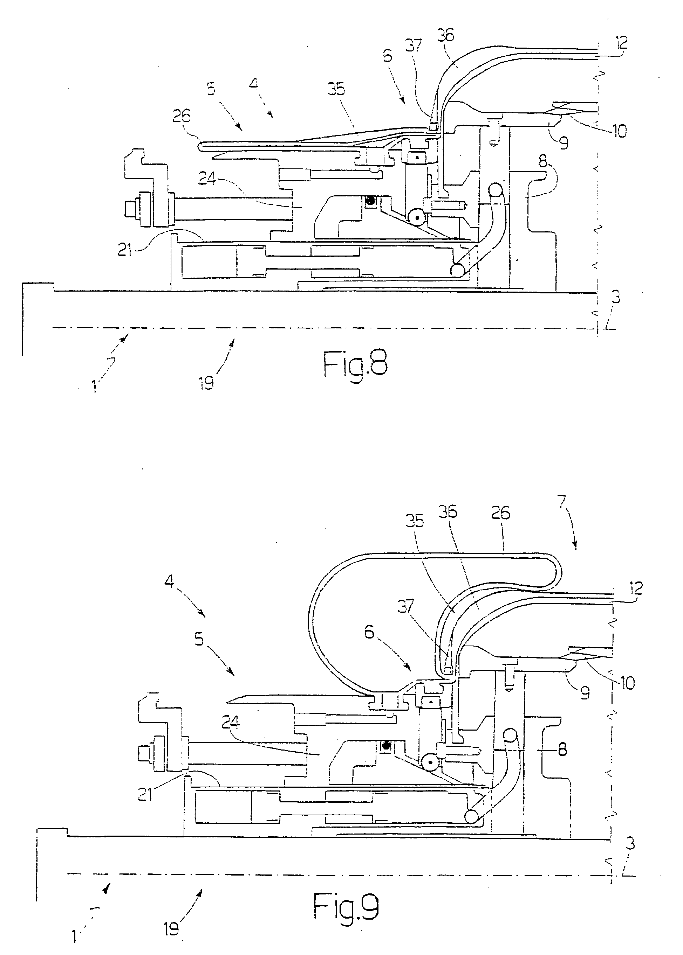

At this point, pre-forming is performed by inflating former bladder 12, bringing central sections 7 closer together axially, i.e. reducing the overall width of central sections 7 (Figure 8), and expanding central sections 7 radially to adequately support sidewalls 35.

Next, turn-up is performed by inflating inflatable bags 26 of lateral sections 5 (Figure 9).

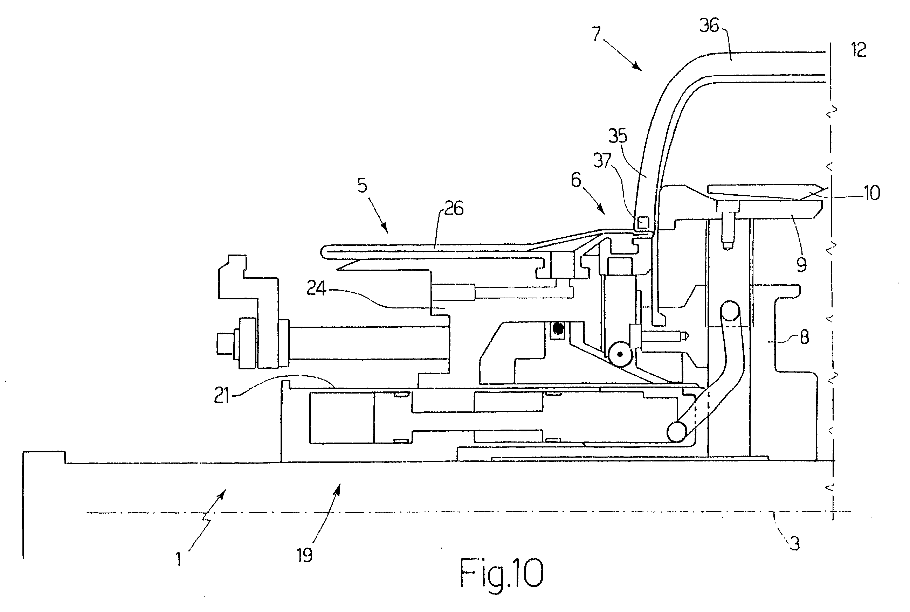

And finally, stitching is performed by bringing central sections 7 closer together axially, i.e. further reducing the overall width of central sections 7 (Figure 10).

## Claims

1. A tyre building drum (1) comprising :
a central shaft (2) mounted for rotation about a longitudinal axis (3) of rotation;
two lateral sections (5), each having a bead locking device (6);
two central sections (7) movable radially to expand or contract; and
a toroidal flexible former bladder (12) covering the central sections (7);
the building drum (1) being **characterized in that** the lateral sections (5) are mounted to slide axially with respect to the central sections (7) between a work position, in which the lateral sections (5) contact the central sections (7), and a maintenance position, in which the lateral sections (5) are detached from the central sections (7).

2. A building drum (1) as claimed in Claim 1, wherein each central section (7) comprises a first pneumatic actuating device (19), in turn comprising an annular first actuating body (21); and each lateral section (5) is mounted to slide on the first actuating body (21) of the first pneumatic actuating device (19).

3. A building drum (1) as claimed in Claim 1 or 2, wherein each central section (7) comprises an annular first supporting body (8) supporting a number of first segments (9), which are equally spaced about the first supporting body (8) and movable radially with respect to the first supporting body (8).

4. A building drum (1) as claimed in Claim 3, wherein each first segment (9) has a number of fingers (10) spaced a given distance apart to define, between each two adjacent fingers (10), a recess (11) of at least the same width as a finger (10); the fingers (10) of the first segments (9) of one central section (7) being aligned with and facing the recesses (11) of the first segments (9) of the other central section (7), so that each finger (10) slides freely inside a respective recess (11) between two fingers (10) of the other central section (7); and the fingers (10) of the first segments (9) interlace when the two central sections (7) are brought together.

5. A building drum (1) as claimed in Claim 3 or 4, wherein the former bladder (12) is fixed laterally to each first supporting body (8) by means of a fastening ring (13) screwed to an outer lateral wall (14) of the first supporting body (8) by means of screws (15).

6. A building drum (1) as claimed in Claim 3, 4 or 5, wherein each annular first supporting body (8) has a number of radial first cylindrical seats (16), each housing in sliding manner a first piston (17) supporting a first segment (9); and each first piston (17) is connected mechanically to the first pneumatic actuating device (19) by a curved transmission lever (20), so as to move radially along the first cylindrical seat (16).

7. A building drum (1) as claimed in Claim 6, wherein each first segment (9) is screwed to the first piston (17) by a pair of radial screws (18).

8. A building drum (1) as claimed in Claim 6 or 7, wherein two annular first chambers (22a, 22b) are defined inside the first actuating body (21) of the first pneumatic actuating device (19), and in which respective second pistons (23a, 23b), integral with each other, slide axially; and each curved transmission lever (20) is hinged at one end to a second piston (23b), and at the other end to the first piston (17).

9. A building drum (1) as claimed in Claim 3, 4 or 5, wherein the first segments (9) are divided into two types arranged alternately and comprising first outer segments (9a) alternating with first inner segments (9b); when the first segments (9) are in the contracted position, the outer surface of the central sections (7) is defined solely by the union of the outer surfaces of the first outer segments (9a); and, when the first segments (9) are expanded, the gap formed between each two adjacent first outer segments (9a) is filled by an underlying first inner segment (9b).

10. A building drum (1) as claimed in Claim 9, wherein each first outer segment (9a) is trapezoidal in section, with a circular outer major base; and, between each two adjacent first outer segments (9a), a recess is formed, in which is inserted a first inner segment (9b), which is trapezoidal in section with an outer minor base.

11. A building drum (1) as claimed in Claim 9 or 10, wherein the first inner segments (9b) travel further than the first outer segments (9a) as the central sections (7) expand/contract.

12. A building drum (1) as claimed in Claim 11, wherein:
each annular first supporting body (8) has a number of radial first cylindrical seats (16), each housing in sliding manner a first piston (17) supporting a first segment (9);
each first piston (17) is connected mechanically to the first pneumatic actuating device (19) by a curved transmission lever (20), so as to move radially along the first cylindrical seat (16);
the first pneumatic actuating device (19) is common to all the first segments (9); and
the difference in travel of the first inner segments (9b) and first outer segments (9a) is achieved solely by a different transmission ratio produced by differences in the transmission levers (20) transmitting motion from the first pneumatic actuating device (19) to the first segments (9).

13. A building drum (1) as claimed in one of Claims 2 to 12, wherein each lateral section (5) comprises an annular second supporting body (24) mounted to slide axially on the first pneumatic actuating device (19).

14. A building drum (1) as claimed in Claim 13, wherein, in the work position, the annular second supporting body (24) is locked to the first pneumatic actuating device (19) by at least one radial lock screw (25).

15. A building drum (1) as claimed in Claim 13 or 14, wherein each annular second supporting body (24) supports an inflatable annular bag (26), which is connectable to a compressed-air source for inflation, or to a vacuum source for deflation.

16. A building drum (1) as claimed in Claim 13, 14 or 15, wherein, on the side facing the central section (7), each second supporting body (24) has a number of radial second cylindrical seats (27), each housing in sliding manner a third piston (28) supporting a second segment (29); all the second segments (29) together define the bead locking device (6); and each third piston (28) is moved radially along the radial second cylindrical seat (27) by a second pneumatic actuating device (30) connected mechanically to the third piston (28) by a connecting wedge (31).

17. A building drum (1) as claimed in Claim 16, wherein the second pneumatic actuating device (30) comprises an annular second chamber (32) formed in the second supporting body (24); and a fourth piston (33), integral with the connecting wedge (31), slides axially along the annular second chamber (32).

18. A building drum (1) as claimed in Claim 17, wherein the bottom portion of each third piston (28) is fitted with an idle roller (34) which rolls along the inclined surface of the connecting wedge (31).

19. A building drum (1) as claimed in one of Claims 1 to 18, wherein the building drum (1) comprises two identical half-drums (4) movable axially to and from each other; and each half-drum (4) comprises a lateral section (5) and a central section (7).

20. A building drum (1) as claimed in Claim 19, wherein each half-drum (4) is mounted on a slide, and is slid axially with respect to the central shaft (2) by a pneumatic actuator.

## Patentansprüche

1. Eine Trommel (1) zur Reifenerzeugung, umfassend:
eine Zentralachse (2), die für eine Rotation um eine längsgerichtete Rotationsachse (3) befestigt ist;
zwei laterale Abschnitte (5), die jeweils eine Sickenverschließvorrichtung (6) aufweisen;
zwei Zentralabschnitte (7), die radial beweglich sind, um sich auszudehnen oder sich zusammenzuziehen; und
eine toroidale flexible Formerblase (12), die die Zentralabschnitte (7) bedeckt;
wobei die Erzeugungstrommel (1) **dadurch gekennzeichnet ist, dass** die lateralen Abschnitte (5) befestigt sind, um axial bezüglich der Zentralabschnitte (7) zwischen einer Arbeitsposition zu gleiten, in welcher die lateralen Abschnitte (5) die Zentralabschnitte (7) berühren, und einer Wartungsposition, in welcher die lateralen Abschnitte (5) von den Zentralabschnitten (7) abgetrennt sind.

2. Erzeugungstrommel (1) nach Anspruch 1, wobei jeder Zentralabschnitt (7) eine erste pneumatische Betätigungsvorrichtung (19) umfasst, die wiederum einen ringförmigen ersten Betätigungskörper (21) umfasst; und
jeder laterale Abschnitt (5) befestigt ist, um auf dem ersten Betätigungskörper (21) der ersten pneumatischen Betätigungsvorrichtung (19) zu gleiten.

3. Erzeugungstrommel (1) nach Anspruch 1 oder 2, wobei jeder Zentralabschnitt (7) einen ringförmigen ersten Stützkörper (8) umfasst, der eine Anzahl erster Segmente (9) stützt, welche gleichmäßig von dem ersten Stützkörper (8) beabstandet sind, und radial beweglich mit Bezug zu dem ersten Stützkörper (8) sind.

4. Erzeugungstrommel (1) nach Anspruch 3, wobei jedes erste Segment (9) eine Anzahl von Fingern (10) aufweist, die mit einem vorgegebenen Abstand beabstandet sind, um jeweils zwischen zwei benachbarten Fingern (10) eine Aussparung (11) mit zumindest der gleichen Breite wie ein Finger (10) zu definieren, wobei die Finger (10) der ersten Segmente (9) des einen Zentralabschnitts (7) mit den Aussparungen (11) der ersten Segmente (9) des anderen Zentralabschnitts (7) ausgerichtet und diesen zugewandt sind, so dass jeder Finger (10) frei innerhalb einer entsprechenden Aussparung (11) zwischen zwei Fingern (10) des anderen Zentralabschnitts (7) gleitet; und die Finger (10) der ersten Segmente (9) ineinander greifen, wenn die zwei Zentralabschnitte (7) zusammengebracht werden.

5. Erzeugungstrommel (1) nach Anspruch 3 oder 4, wobei die Formerblase (12) lateral an jedem ersten Stützkörper (8) mittels eines Befestigungsrings (13) befestigt ist, welcher auf eine äußere laterale Wand (14) des ersten Stützkörpers (8) mittels Schrauben (15) geschraubt ist.

6. Erzeugungstrommel (1) nach Anspruch 3, 4 oder 5, wobei jeder ringförmige erste Stützkörper (8) eine Anzahl radialer erster zylindrischer Sitze (16) aufweist, jedes Gehäuse in einer gleitenden Weise einen ersten Kolben (17), der ein erstes Segment (9) stützt, und jeder erste Kolben (17) mechanisch mit der ersten pneumatischen Betätigungsvorrichtung (19) durch einen gekrümmten Übertragungshebel (20) verbunden ist, um sich radial entlang des ersten zylindrischen Sitzes (16) zu bewegen.

7. Erzeugungstrommel (1) nach Anspruch 6, wobei jedes erste Segment (9) auf den ersten Kolben (17) durch ein Paar radialer Schrauben (18) geschraubt ist.

8. Erzeugungstrommel (1) nach Anspruch 6 oder 7, wobei zwei ringförmige erste Kammern (22a, 22b) innerhalb des ersten Betätigungskörpers (21) der ersten pneumatischen Betätigungsvorrichtung (19) definiert sind, und wobei entsprechende zweite Kolben (23a, 23b), die einstückig miteinander sind, axial gleiten; und jeder gekrümmte Übertragungshebel (20) mit einem Ende an einem zweiten Kolben (23b) gelenkig befestigt ist, und das andere Ende an dem ersten Kolben (17) gelenkig befestigt ist.

9. Erzeugungstrommel (1) nach Anspruch 3, 4 oder 5, wobei die ersten Segmente (9) in zwei Typen aufgeteilt werden, die abwechselnd angeordnet sind, und erste äußere Segmente (9a) umfassen, die sich mit ersten inneren Segmenten (9b) abwechseln; wenn die ersten Segmente (9) in der zusammengezogenen Position sind, die äußere Oberfläche der Zentralabschnitte (7) lediglich durch die Vereinigung der äußeren Oberflächen der ersten äußeren Segmente (9a) definiert wird; und, wenn die ersten Segmente (9) ausgedehnt sind, der Spalt, der zwischen jeden zwei benachbarten ersten äußeren Segmenten (9a) gebildet wird, durch ein darunterliegendes erstes inneres Segment (9b) gefüllt wird.

10. Erzeugungstrommel (1) nach Anspruch 9, wobei jedes erste äußere Segment (9a) im Querschnitt trapezförmig ist, mit einer kreisförmigen äußeren Hauptbasis; und, zwischen jeden zwei benachbarten ersten äußeren Segmenten (9a) eine Aussparung gebildet ist, in welcher ein erstes inneres Segment (9b) eingefügt ist, welches im Querschnitt trapezförmig ist mit einer äußeren Nebenbasis.

11. Erzeugungstrommel (1) nach Anspruch 9 oder 10, wobei die ersten inneren Segmente (9b) weiter als die ersten äußeren Segmente (9a) verfahren, wenn sich die Zentralabschnitte (7) ausdehnen/zusammenziehen.

12. Erzeugungstrommel (1) nach Anspruch 11, wobei:
jeder ringförmige erste Unterstützungskörper (8) eine Anzahl radialer erster zylindrischer Sitze (16) aufweist, wobei jedes Gehäuse in einer gleitenden Art einen ersten Kolben (17) aufweist, welcher ein erstes Segment (9) stützt;
jeder erste Kolben (17) mechanisch mit der ersten pneumatischen Betätigungsvorrichtung durch einen gekrümmten Übertragungshebel (20) verbunden ist, um sich radial entlang des ersten zylindrischen Sitzes (16) zu bewegen;
die erste pneumatische Betätigungsvorrichtung (19) für alle ersten Segmente (9) gemeinsam ist; und
der Unterschied im Verfahrweg der ersten inneren Segmente (9b) und der ersten äußeren Segmente (9a) lediglich durch ein unterschiedliches Übertragungsverhältnis erreicht wird, welches durch Unterschiede bei den Übertragungshebeln (20) erzeugt wird, die Bewegung von der ersten pneumatischen Betätigungsvorrichtung (19) zu den ersten Segmenten (9) übertragen.

13. Erzeugungstrommel (1) nach Anspruch 2 bis 12, wobei jeder laterale Abschnitt (5) einen ringförmigen zweiten Stützkörper (24) umfasst, der befestigt ist, um axial auf der ersten pneumatischen Betätigungsvorrichtung (19) zu gleiten.

14. Erzeugungstrommel (1) nach Anspruch 13, wobei in der Arbeitsposition der ringförmige zweite Stützkörper (24) mit der ersten pneumatischen Betätigungsvorrichtung (19) durch zumindest eine radiale Verschlußschraube (25) verschlossen ist.

15. Erzeugungstrommel (1) nach Anspruch 13 oder 14, wobei jeder ringförmige zweite Stützkörper (24) eine aufblasbare ringförmige Tasche (26) stützt, welche mit einer Druckluftquelle zum Aufblasen oder mit einer Vakuumquelle zum Luftablassen verbindbar ist.

16. Erzeugungstrommel (1) nach Anspruch 13,14 oder 15, wobei auf der Seite, welche dem Zentralabschnitt (7) zugewandt ist, jeder zweite Stützkörper (24) eine Anzahl radialer zweiter zylindrischer Sitze (27) aufweist, die jeweils in einer gleitenden Art einen dritten Kolben (28) beherbergen, welcher ein zweites Segment (29) stützt; wobei all die zweiten Segmente (29) zusammen die Sickenverschließvorrichtung (6) definieren; und jeder dritte Kolben (28) radial entlang des radialen zweiten zylindrischen Sitzes (27) durch eine zweite pneumatische Betätigungsvorrichtung (30) bewegt wird, die mechanisch mit dem dritten Kolben (28) durch einen Verbindungskeil (31) verbunden ist.

17. Erzeugungstrommel (1) nach Anspruch 16, wobei die zweite pneumatische Betätigungsvorrichtung (30) eine ringförmige zweite Kammer (32) umfasst, die in dem zweiten Stützkörper (24) gebildet ist; und einen vierten Kolben (33), der einstückig mit dem Verbindungskeil (31) ist, und axial entlang der ringförmigen zweiten Kammer (32) gleitet.

18. Erzeugungstrommel (1) nach Anspruch 17, wobei der untere Bereich jedes dritten Kolbens (28) mit einer Leerlaufrolle (34) versehen ist, welche entlang der geneigten Oberfläche des Verbindungskeils (31) rollt.

19. Erzeugungstrommel (1) nach irgendeinem der Ansprüche 1 bis 18, wobei die Erzeugungstrommel (1) zwei identische Halbtrommeln (4) umfasst, die axial zu- und voneinander beweglich sind; und wobei jede Halbtrommel (4) einen lateralen Abschnitt (5) und einen Zentralabschnitt (7) umfasst.

20. Erzeugungstrommel (1) nach Anspruch 19, wobei jede Halbtrommel (4) auf einer Gleitfläche befestigt ist, und axial bezüglich der Zentralachse (2) durch einen pneumatischen Betätiger gleitend angetrieben wird.

## Revendications

1. Tambour à confectionner les pneumatiques (1) comprenant :
un arbre central (2) monté en rotation autour d'un axe longitudinal (3) de rotation ;
deux sections latérales (5), chacune comportant un dispositif de verrouillage de talon (6) ;
deux sections centrales (7) mobiles radialement pour une dilatation ou une contraction ; et
une vessie de conformation, souple, torique (12) recouvrant les sections centrales (7) ;
le tambour à confectionner (1) étant **caractérisé en ce que** les sections latérales (5) sont montées de façon à glisser axialement par rapport aux sections centrales (7) entre une position opérante, dans laquelle les sections latérales (5) entrent en contact avec les sections centrales (7), et une position de maintenance, dans laquelle les sections latérales (5) sont détachées des sections centrales (7).

2. Tambour à confectionner (1) selon la revendication 1, dans lequel chaque section centrale (7) comprend un premier dispositif d'actionnement pneumatique (19), comprenant, à son tour, un premier corps d'actionnement annulaire (21) ; et chaque section latérale (5) est montée de manière à glisser sur le premier corps d'actionnement annulaire (21) du premier dispositif d'actionnement pneumatique (19).

3. Tambour à confectionner (1) selon la revendication 1 ou 2, dans lequel chaque section centrale (7) comprend un premier corps de support annulaire (8) supportant un nombre de premiers segments (9), qui sont équidistants autour du premier corps de support (8) et mobiles radialement par rapport au premier corps de support (8).

4. Tambour à confectionner (1) selon la revendication 3, dans lequel chaque premier segment (9) comporte un nombre de doigts (10) espacés d'une distance donnée pour définir, entre deux doigts adjacents (10), un évidement (11) ayant au moins la même largeur qu'un doigt (10) ; les doigts (10) des premiers segments (9) d'une section centrale (7) étant alignés avec, et tournés vers, les évidements (11) des premiers segments (9) de l'autre section centrale (7), de manière que chaque doigt (10) glisse librement à l'intérieur d'un évidement respectif (11) entre deux doigts (10) de l'autre section centrale (7) ; et les doigts (10) des premiers segments (9) s'entrelacent lorsque les deux sections centrales (7) sont rapprochées.

5. Tambour à confectionner (1) selon la revendication 3 ou 4, dans lequel la vessie de conformation (12) est fixée latéralement à chaque premier corps de support (8) au moyen d'un anneau de fixation (13) vissé à une paroi latérale externe (14) du premier corps de support (8) au moyen de vis (15).

6. Tambour à confectionner (1) selon la revendication 3, 4 ou 5, dans lequel chaque premier corps de support annulaire (8) comporte un nombre de premiers sièges cylindriques radiaux (16), logeant chacun, en glissement, un premier piston (17) supportant un premier segment (9) ; et chaque premier piston (17) est raccordé mécaniquement au premier dispositif d'actionnement pneumatique (19) par un levier de transmission incurvé (20), de manière à se déplacer radialement le long du premier siège cylindrique (16).

7. Tambour à confectionner (1) selon la revendication 6, dans lequel chaque premier segment (9) est vissé au premier piston (17) par une paire de vis radiales (18).

8. Tambour à confectionner (1) selon la revendication 6 ou 7, dans lequel deux premières chambres annulaires (22a, 22b) sont définies à l'intérieur du premier corps d'actionnement (21) du premier dispositif d'actionnement pneumatique (19), et dans lequel des seconds pistons (23a, 23b) respectifs, d'un seul tenant, glissent axialement ; et chaque levier de transmission incurvé (20) est articulé, à une extrémité, à un deuxième piston (23b), et, à l'autre extrémité, au premier piston (17).

9. Tambour à confectionner (1) selon la revendication 3, 4 ou 5, dans lequel les premiers segments (9) sont divisés en deux types alternés et comprenant des premiers segments externes (9a) alternés avec des premiers segments internes (9b) ; lorsque les premiers segments (9) se trouvent dans la position contractée, la surface externe des sections centrales (7) est définie uniquement par la réunion des surfaces externes des premiers segments externes (9a) ; et, lorsque les premiers segments (9) sont dilatés, l'espace formé entre deux premiers segments externes (9a) adjacents est rempli par un premier segment interne (9b) sous-jacent.

10. Tambour à confectionner (1) selon la revendication 9, dans lequel chaque premier segment externe (9a) est trapézoïdal en coupe, avec une base principale externe circulaire ; et, entre deux premiers segments externes (9a) adjacents, un évidement est formé, dans lequel est inséré un premier segment interne (9b), qui est trapézoïdal en coupe, avec une base secondaire externe.

11. Tambour à confectionner (1) selon la revendication 9 ou 10, dans lequel les premiers segments internes (9b) se déplacent davantage que les premiers segments externes (9a) tandis que les sections centrales (7) se dilatent/contractent.

12. Tambour à confectionner (1) selon la revendication 11, dans lequel :
chaque premier corps de support annulaire (8) comporte un nombre de premiers sièges cylindriques radiaux (16), logeant chacun, en glissement, un premier piston (17) supportant un premier segment (9) ;
chaque premier piston (17) est raccordé mécaniquement au premier dispositif d'actionnement pneumatique (19) par un levier de transmission incurvé (20), de manière à se déplacer radialement le long du premier siège cylindrique (16) ;
le premier dispositif d'actionnement pneumatique (19) est commun à tous les premiers segments (9) ; et
la différence de déplacement des premiers segments internes (9b) et premiers segments externes (9a) est obtenue uniquement par un rapport de transmission différent produit par des différences dans les leviers de transmission (20) transmettant le mouvement du premier dispositif d'actionnement pneumatique (19) aux premiers segments (9).

13. Tambour à confectionner (1) selon l'une quelconque des revendications 2 à 12, dans lequel chaque section latérale (5) comprend un second corps de support annulaire (24) monté pour glisser axialement sur le premier dispositif d'actionnement pneumatique (19).

14. Tambour à confectionner (1) selon la revendication 13, dans lequel, dans la position opérante, le second corps de support annulaire (24) est verrouillé au premier dispositif d'actionnement pneumatique (19) par au moins une vis de blocage radiale (25).

15. Tambour à confectionner (1) selon la revendication 13 ou 14, dans lequel chaque second corps de support annulaire (24) supporte une poche annulaire gonflable (26), qui peut être raccordée à une source d'air comprimé pour gonflage, ou à une source de vide pour dégonflage.

16. Tambour à confectionner (1) selon la revendication 13, 14 ou 15, dans lequel, sur le côté tourné vers la section centrale (7), chaque second corps de support (24) comporte un nombre de seconds sièges cylindriques radiaux (27), logeant chacun, en glissement, un troisième piston (28) supportant un second segment (29) ; tous les seconds segments (29) définissent conjointement le dispositif de verrouillage de talon (6) ; et chaque troisième piston (28) est déplacé radialement le long du second siège cylindrique radial (27) par un second dispositif d'actionnement pneumatique (30) raccordé mécaniquement au troisième piston (28) par une clavette de raccordement (31).

17. Tambour à confectionner (1) selon la revendication 16, dans lequel le second dispositif d'actionnement pneumatique (30) comprend une seconde chambre annulaire (32) ménagée dans le second corps de support (24) ; et un quatrième piston (33), d'un seul tenant avec la clavette de raccordement (31), glisse axialement le long de la seconde chambre annulaire (32).

18. Tambour à confectionner (1) selon la revendication 17, dans lequel la partie inférieure de chaque troisième piston (28) est pourvue d'un galet libre (34) qui roule le long de la surface inclinée de la clavette de raccordement (31).

19. Tambour à confectionner (1) selon l'une quelconque des revendications 1 à 18, le tambour à confectionner (1) comprenant deux moitiés de tambour (4) identiques, mobiles axialement en éloignement et rapprochement ; et chaque moitié de tambour (4) comprend une section latérale (5) et une section centrale (7).

20. Tambour à confectionner (1) selon la revendication 19, dans lequel chaque moitié de tambour (4) est montée sur une glissière, et est glissée axialement par rapport à l'arbre central (2) par un actionneur pneumatique.
